# EUROPEAN PATENT APPLICATION

(11) **EP 4 675 714 A1**
(43) Date of publication of application: **07.01.2026**
(21) Application number: 25185506.0
(22) Date of filing: 26.06.2025
(51) Int. Cl.: H01M 4/66, H01M 10/04, H01M 10/0585, H01M 4/02

(54) **MULTI-LAYER BIPOLAR BATTERY AND METHOD THEREFOR**

(30) Priority: 01.07.2024 US 202463666512 P; 11.06.2025 US 202519234952
(71) Applicant: Lasagna.one Inc., San Jose, CA 95134 (US)
(72) Inventor: Ohashi, Akinari, San Jose, 95134 (US); Lin, Xi, San Jose, 95134 (US); Katoh, Yuki, San Jose, 95134 (US)
(74) Representative: London IP Ltd

(57) **Abstract**

A method of forming a stacked bipolar battery laminates a plurality of layered cells of the stacked bipolar battery together at a single time.

## Description

### RELATED APPLICATIONS

This patent application is related to U.S. Provisional Application No. 63/666,512 filed July 1, 2024, entitled "MULTI-LAYER BIPOLAR BATTERY CURRENT COLLECTOR AND METHOD THEREFOR", in the names of the present inventors and which is incorporated herein by reference in its entirety. The present patent application claims the benefit under 35 U.S.C §119(e) of the aforementioned provisional application.

### TECHNICAL FIELD

The present application relates generally to high voltage electrochemical cells including bipolar batteries and, more specifically, to a multi-layer bipolar battery stack having current collectors of specific yield strength and high ductility that prevent current collectors from cracking during a multi-layer lamination process.

### BACKGROUND

Batteries are well known devices that are ubiquitous in modern everyday use. Over time, different types of batteries have been developed for different purposes, ranging from simple single cell batteries used to power relatively low-tech devices such as flashlights, for example, to complex, multi-cell batteries used to power more sophisticated devices such as those used in industrial settings including computers, for example. More recently, multi-layer bipolar batteries have been developed. In a multi-layer bipolar battery, multiple cell layers make up the whole of the battery. Basic components comprising such layers typically include electrodes, current collectors, and separators.

A common problem with multi-layer bipolar batteries is that they present a risk of ionic shortage. In this regard, if electrodes from different layers come into contact due to current collector breakage resulting from fabrication processes, especially during multi-layer lamination, the battery cells fail to exhibit the necessary voltage, leading to lower overall voltage and poor cyclability.

In the past, one solution to prevent the above-described risk of ionic shortage has involved fabricating single layers in the bipolar battery individually to avoid current collector breakage and stacking individual cell layers together afterwards to achieve high voltage. However, this solution can be problematic, in that extensive processing time is needed to fabricate each layer individually and stack them together. For example, laminating and stacking ten layers requires ten times of pressurization, while in a situation enabling ten-layer lamination, only one time of pressurization is required to achieve a ten-layer stack. Further, contact between each layer is looser for stacked single layers, as compared to contact between each layer in a laminated multi-layer stack. Such a loose connection between stacked single layers can be unstable, leading to premature breakdown of the battery and correspondingly shorter battery life.

A need therefore exists for a current collector for a multi-layer bipolar battery that has specific yield strength and high ductility to prevent the current collector from cracking during a multi-layer lamination process. A need further exists for a multi-layer bipolar stacked battery having such current collectors. The present disclosure satisfies these needs as well as provides other, related advantages.

### SUMMARY

According to an embodiment of the disclosure, a method of forming a stacked bipolar battery is disclosed. The method laminates a plurality of layered cells of the stacked bipolar battery together at a single time

According to an embodiment of the disclosure, a method of forming a stacked bipolar battery is disclosed. The method forms a plurality of layered cells. Each of the plurality of layered cells comprises: a first current collector having a first side and a second side, wherein each of the first current collectors has a yield strength greater than or equal to 50 MPa to prevent over expansion and less than or equal to 1000 MPa to prevent delaminating due to elastic deformation; a cathode layer having a first side and a second side, wherein the first side of the cathode is formed on the second side of the first current collector; a separator layer having a first side and a second side, wherein the first side of the separator is formed on the second side of the cathode layer; and an anode layer having a first side and a second side, wherein the first side of the anode layer is formed on the second side of the separator layer. The method laminates the plurality of layered cells of the stacked bipolar battery together at a single time.

According to an embodiment of the disclosure, a method of forming a stacked bipolar battery is disclosed. The method of forming a stacked bipolar battery comprises forming a plurality of layered cells, wherein each of the plurality of layered cells comprises: a first current collector having a first side and a second side, wherein each of the first current collectors has a yield strength greater than or equal to 50 MPa to prevent over expansion and less than or equal to 1000 MPa to prevent delaminating due to elastic deformation, each of the first current collectors allowing for deformation between 5% and 15%; a cathode layer having a first side and a second side, wherein the first side of the cathode is formed on the second side of the first current collector; a separator layer having a first side and a second side, wherein the first side of the separator is formed on the second side of the cathode layer; and an anode layer having a first side and a second side, wherein the first side of the anode layer is formed on the second side of the separator layer. The method laminates the plurality of layered cells of the stacked bipolar battery together at a single time.

### BRIEF DESCRIPTION OF THE DRAWINGS

The present application is further detailed with respect to the following drawings. These figures are not intended to limit the scope of the present application, but rather, illustrate certain attributes thereof. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The disclosure itself, however, as well as a preferred mode of use and further objectives and advantages thereof, can be best understood by reference to the following detailed description of illustrative embodiments when read in conjunction with the accompanying drawings, wherein:
**Fig. 1** is a side view of a multi-layer bipolar battery stack apparatus, illustrating an exemplary arrangement of battery cell components as they can appear prior to undergoing a multi-layer lamination process, in accordance with one aspect of the present disclosure;
**Fig. 2** is a side view of a multi-layer bipolar battery stack apparatus, illustrating an exemplary arrangement of battery cell components as they can appear after undergoing a multi-layer lamination process, in accordance with one aspect of the present disclosure;
**Fig. 3** is an exploded view of a single layer of a multi-layer bipolar battery stack apparatus, in accordance with one aspect of the present disclosure;
**Fig. 4** is a side view of a single layer of a multi-layer bipolar battery stack apparatus, illustrating an exemplary arrangement of battery cell components as they can appear prior to undergoing a multi-layer lamination process, in accordance with one aspect of the present disclosure; and
**Fig. 5** is a side view of a single layer of a multi-layer bipolar battery stack apparatus, illustrating an exemplary arrangement of battery cell components as they can appear after undergoing a multi-layer lamination process, in accordance with one aspect of the present disclosure.

### DESCRIPTION OF THE APPLICATION

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences may be accomplished by different embodiments that are also intended to be encompassed within the spirit and scope of this disclosure.

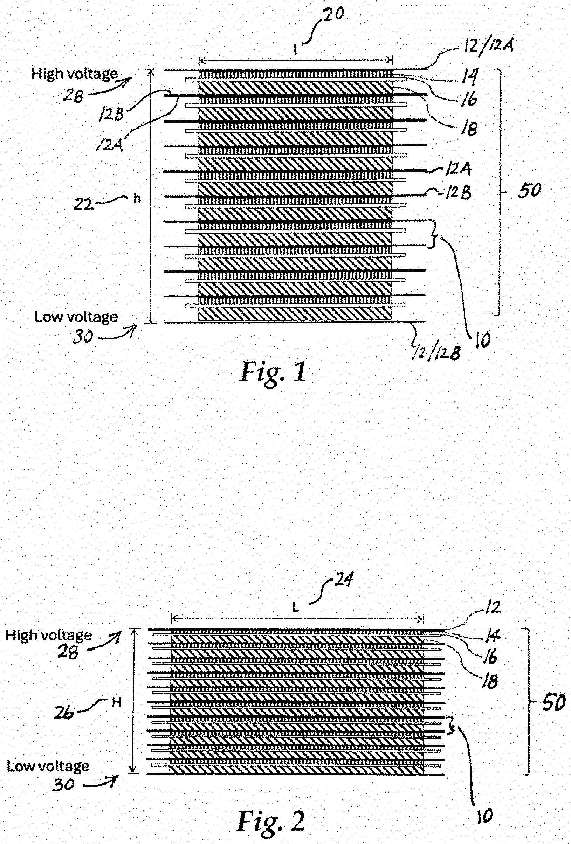

**Figs. 1-5****,** together, disclose embodiments of a multi-layer bipolar battery stack apparatus **50** of the present invention. The multi-layer bipolar battery stack apparatus **50** features current collectors having specific strength and high ductility that prevent the current collectors from cracking during a multi-layer lamination process. In general, the multi-layer bipolar battery stack apparatus **50** utilizes specific mechanical properties, thereby enabling multi-layer lamination of bipolar battery cells without breaking the current collectors in the multi-layer stack. This significantly increases production throughput and yield, and potentially electrical performance, while minimizing the probability of battery shortage due to bipolar current collector breakage.

Referring first to **Fig. 1****,** an embodiment of the multi-layer bipolar battery stack apparatus **50** of the present invention is shown. The multi-layer bipolar battery stack apparatus **50** generally has a layered configuration comprising multiple individual layered cells **10.** While in this embodiment a total of ten layered cells **10** are shown, it should be generally understood that the number of layered cells **10** employed in the multi-layer bipolar battery stack apparatus **50** may deviate from this amount, as may be needed depending upon the desired use for and corresponding configuration of the multi-layer bipolar battery stack apparatus **50.**

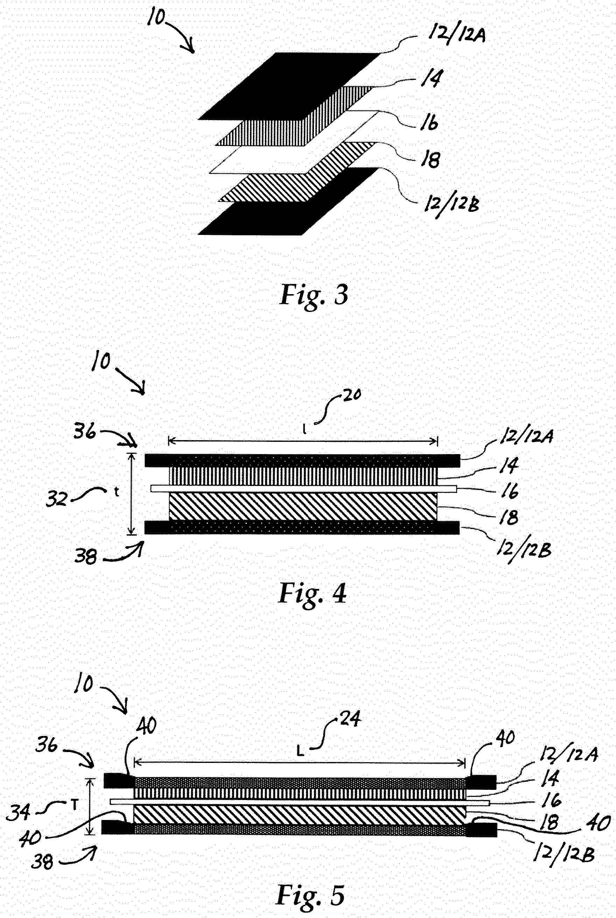

Turning now to **Figs. 3-5****,** an embodiment of a single layered cell **10** of the multi-layer bipolar battery stack apparatus **50** is depicted. Each layered cell **10** can be comprised of various shapes. For example, the layered cell **10** may be circular, square, rectangular, hexagonal, trapezoidal, or some other suitable shape, as may be needed depending upon the desired use for and corresponding configuration of the multi-layer bipolar battery stack apparatus **50.** As can be seen in **Figs. 3-5****,** the layered cell **10** generally comprises the following components: at least one current collector **12,** a cathode layer **14,** a separator **16,** and an anode layer **18.** As shown, each layered cell **10** may include a pair of current collectors **12** comprising a first current collector **12A** and a second current collector **12B** (collectively referred to as the current collectors **12).** For each layered cell **10,** the first current collector **12A** may be positioned proximate an upper region **36** of the layered cell **10,** while the second current collector **12B** may be positioned proximate a lower region **38** of the layered cell **10,** with the cathode layer **14,** separator **16,** and anode layer **18** juxtaposed between the current collectors **12.** As shown in **Figs. 1-2****,** adjacent layered cells **10** in the multi-layer bipolar battery stack apparatus **50** share a current collector **12,** such that the second current collector **12B** of an upper layered cell **10** also serves as the first current collector **12A** of a lower, adjacent layered cell **10.**

With reference to **Figs. 1-5****,** the current collector **12** will be discussed in further detail. The current collector **12** may be composed of metal foil, a metal mesh, or the like. Preferably, the current collector **12** is composed of metal foil. Exemplary metals of which the current collector **12** may be comprised include Cu, Ni, Cr, Au, Pt, Ag, Au, Al, Fe, Ti, Zn, Co, or stainless steel. Such metals can be in pure form, doped, alloy or clad. The surface of the metal may also be covered with carbon or some other suitable material. This will ensure good adhesion with the cathode layer **14** and anode layer **18.** In addition to metal, carbon can also be used for the current collector **12.** Resin composites with an electron conductor (metal or carbon or metal coated plastic) as filler can also be used for the current collector **12.** Possible carbon filler materials include acetylene black (AB), Ketene black (KB), VGCF, carbon nanotubes, carbon nanohorns, graphite, needle-like graphite, or fullerenes. Possible filler metals include stainless steel, Cu, Ni, Cr, Au, Pt, Ag, Au, Al, Fe, Ti, Zn, or Co. The overall shape of the filler can vary and can be spherical, fibrous, needle-like, or hollow, or some other suitable shape. When needle or fiber-shaped fillers are used, it may be effective to make them oriented. This is because the orientation controls the flow of electrons and makes it easier to interrupt the current in the event of an abnormality.

It should be noted that the composition, configuration, and conductive condition of the current collector **12** can be varied. For example, the current collector can be comprised of various materials, such as metallic foils (as discussed above), conductive films or papers, or single-layer or sandwiched composites with various electrically conductive agents processed using different methods, and the like. The current collector **12** can also be electrically conductive continuously, such as by utilizing metallic foils, or only electrically conductive after cell fabrication, such as by utilizing composites whose conductivity is activated only after being compressed. Additionally, the current collector's **12** electrical conductivity can be either isotropic or anisotropic.

Regarding dimensions of the current collector **12,** generally, the thickness of the current collector **12** is not specifically limited, and for example, is preferably 0.1 um to 1 mm, and is more preferably 1 um to 50 um. Further, the area of current collector **12** can be varied. For example, the area of the current collector **12** can be relatively larger or smaller than the cathode layer **14,** anode layer **18,** or separator **16** layer, or have an area dimension falling in between the sizes of the different respective layers, namely, the cathode layer **14,** separator **16** layer, and/or anode layer **18.**

Regarding shape, the shape of current collector **12** can be varied. For example, the shape of the current collector **12** can be of a variety of shapes, such as circular, square, rectangular, hexagonal, trapezoidal, or otherwise.

It should also be noted that the current collector **12** can be comprised with insulating frames or can be standalone.

When subject to stress for lamination, the current collector **12** needs the ability to deform plastically (as discussed further below), but not prematurely in the lamination process. Ductility of the current collector **12** should also be high enough, so that the current collector **12** deforms together with the remaining components of the multi-layer bipolar battery stack apparatus **50** without rupture during the fabrication process. For example, the current collector **12** should have a yield strength between 50 MPa and 1000 MPa and an elongation at break of at least 5% to prevent cell shorting due to current collector **12** breakage during a multi-layer lamination process.

Turning now to the cathode layer **14,** this component will be discussed in further detail. The cathode layer **14** is a layer containing at least a cathode active material (CAM). Examples of the CAM include: layered lithium containing oxide materials, such as LiCoO₂, LiMnO₂, LiNiO₂, LiNiₓMn_{y}Co_{1-x-y}O₂, LiNiₓCo_{y}Al_{1-x-y}O₂, lithium containing phosphate with olivine structure, such as LiFePO₄, LiFeₓMn₁₋ₓPO₄, LiMnPO₄, LiFeₓCo₁ₓPO₄, LiCoPO₄, lithium containing oxide materials with spinel structure, such as LiNi_{0.5}Mn_{1.5}O₄, LiMn₂O₄, lithium excess layered structured oxide, such as Li₂MnO₃, Li₂RuO₃, Li₂RuₓTi₁₋ₓO₃, Li₂RuₓSni₋ₓO₃, Li₂MnₓTi₁₋ₓO₃, Li₂MnₓSn₁₋ₓO₃, layered lithium containing sulfide materials, such as TiS₂, MoS₂, NbS₂, TaS₂, Sulfur, or lithium containing sulfide with Chevrel structure, such as LiCuₓMoS_{1-z}.

The surface of the CAM may be coated by a thin layer of materials, collectively comprising a coating. Examples of the coating include: crystalline phase, such as Li₂ZrO₃, LiNbO₃, LiPO₃, Li₃PO₄, LiTi₂(PO₄)₃, Liz(PO₄)₃, ZrO₂, Al₂O₃, EtOLi, MtOLi, Lion, Li₂CO₃ and/or amorphous phase, such as metal alkoxide and metal phosphate.

The cathode layer **14** may contain solid electrolytes, binders, or electron conductive additives, in addition to the CAM. Examples of electrolytes include organic liquid, organic polymers, and inorganic solids. Preferably, the electrolyte employed comprises inorganic solids. This is because inorganic solids exhibit a relatively higher transference number of lithium compared to liquid, as well as relatively higher ionic conductivity compared to organic polymers. This is also because inorganic solids are usually rigid and do not show liquidity, which is preferred to compose the multi-layer bipolar battery stack apparatus **50** without ionic shorting.

Preferred examples of electrolytes utilized for the cathode layer **14** include materials having a composition of Li-P-O-N, Li-Si-O, Li-B-Si-O, Li-B-O, Li-C-B-O, Li-Al-Si-O, Li-Ti-AlP-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or a combination of those), Li-M'-S-O (M' is B, Al, Si, P, Zn, Ge, Zr, Sn or combination of those), Li-P-S-X (X is F, Cal, Br or combination of those), Li-P-S-O-X' (X' is F, Cal, Br or a combination of those), Li-B-H, Li-B-N-H, Li-B-H-O, Li-B-N-H-O, Li-M"-X" (M is In, Zr, Sc, Ga, Nb, Ta or a combination of those; X" is F, Cal, Br or a combination of those), or Li-M"-X"-O (M" is In, Zr, Sc, Ga, Nb, Ta or combination of those; X" is F, Cal, Br or combination of those).

Examples of a binder that may be contained in the cathode layer **14** include butadiene rubber (BR), butyl rubber (IIR), acrylate butadiene rubber (ABR), polyvinylidene difluoride (PVDF), and polytetrafluoroethylene (PTFE). Side chains of the binder may be modified by functional groups.

In addition, the cathode layer **14** may contain an electron conductive additive. For example, various types of carbon may include acetylene black (AB), Ketene black (KB), VGCF, carbon nanotubes, carbon nanohorns, graphite, needle-like graphite, or fullerenes.

The thickness of the cathode layer **14** is not specifically limited, but a relatively thicker layer may be preferred when higher capacity is required. For example, the thickness of the cathode layer **14** is preferably 0.1 um to 1 mm, and is more preferably 60 um to 500 um.

Turning now to the anode layer **18,** this component will be discussed in further detail. The anode layer **18** is a layer containing at least an anode active material (AAM). Examples of the AAM include: layered lithium containing sulfide materials, such as TiS₂, MoS₂, NbS₂, TaS₂, titanium containing oxides, such as, Li₄Ti₅O₁₂, TiₓNb_{y}O_{z}, LiₓTi₂(PO₄)₃, tungsten containing oxides, such as Nb₁₆W₅O₅₅, Nb₁₈W₁₆0₉₃, vanadium containing oxide, such as LiVO₂, artificial carbon (or hard carbon), graphite, and Li-metal alloy, such as LiₓIn, LiₓSn, Leₓis, Liₑge, LiₓAl, or metallic lithium.

The anode layer **18** may further contain solid electrolytes, binders, or electron conductive additives, in addition to the AAM. Examples of electrolytes include organic liquid, organic polymers, and inorganic solids. Preferably, the electrolyte employed comprises inorganic solids. This is because, as noted above, inorganic solids exhibit a relatively higher transference number of lithium compared to liquid, as well as relatively higher ionic conductivity compared to organic polymers. This is also because inorganic solids are usually rigid and do not show liquidity, which is preferred to compose the multi-layer bipolar battery stack apparatus **50** without ionic shorting.

Preferred Examples of electrolytes include materials such as those having a composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or a combination of those), Li-M'-S-O (M' is B, Al, Si, P, Zn, Ge, Zr, Sn or combination of those), Li-P-S-X (X is F, Cal, Br or combination of those), Li-P-S-O-X' (X' is F, Cal, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cal, Br or combination of those), or Li-M"-X"-O (M" is In, Zr, Sc, Ga, Nb, Ta or combination of those; X" is F, Cal, Br or combination of those).

Examples of a binder that may be contained in the anode layer **18** include the following: butadiene rubber (BR), butyl rubber(IIR), acrylate butadiene rubber (ABR), polyvinylidene difluoride (PVDF), and polytetrafluoroethylene (PTFE). Side chains of the binder may be modified by functional groups.

In addition, the anode layer **18** may contain an electron conductive additive. For example, various types of carbon may include acetylene black (AB), Ketene black (KB), VGCF, carbon nanotubes, carbon nanohorns, graphite, needle-like graphite, or fullerenes.

The thickness of the anode layer **18** is not specifically limited, but a relatively thicker layer may be preferred when higher capacity is required. For example, the thickness of the anode layer **18** is preferably 0.1 um to 1 mm, and is more preferably 60 um to 500 um.

Turning now to the separator **16,** this component will be discussed in further detail. The separator **16** is an electron insulator but an ionic conductor. The electrolyte utilized can be an organic liquid, organic polymer or inorganic solid. If an organic based electrolyte (liquid or polymer) is chosen, the separator **16** might be a porous membrane comprised of polymers such as polyethylene (PE), polypropylene (PP) and a combination of those; the membrane is immersed by an organic based electrolyte.

Preferably, the electrolyte utilized in the separator **16** is comprised of inorganic solids. This is because, as noted above, inorganic solids exhibit a relatively higher transference number of lithium compared to liquid, as well as relatively higher ionic conductivity compared to organic polymers. This is also because inorganic solids are usually rigid and do not show liquidity, which is preferred to compose the multi-layer bipolar battery stack apparatus **50** without ionic shorting.

Preferred examples of electrolytes include materials such as those having the composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or a combination of those), Li-M'-S-O (M' is B, Al, Si, P, Zn, Ge, Zr, Sn or a combination of those), Li-P-S-X (X is F, Cal, Br or a combination of those), Li-P-S-O-X' (X' is F, Cal, Br or a combination of those), Li-B-H, Li-B-N-H, Li-B-H-O, Li-B-N-H-O, Li-M"-X" (M" is In, Zr, Sc, Ga, Nb, Ta or a combination of those; X" is F, Cal, Br or a combination of those), or Li-M"-X"-O (M" is In, Zr, Sc, Ga, Nb, Ta or a combination of those; X" is F, Cal, Br or a combination of those).

The solid electrolyte layer comprising the separator **16** may contain a binder in addition to the above-mentioned solid electrolyte material. Examples of a binder that may be contained in the separator **16** include the following: butadiene rubber (BR), butyl rubber (IIR), acrylate butadiene rubber (ABR), polyvinylidene difluoride (PVDF), and polytetrafluoroethylene (PTFE). Side chains of the binder may be modified by functional groups.

The thickness of the separator **16** is not specifically limited, but a relatively thinner layer may be preferred when higher capacity is required. For example, the thickness of separator 16 is preferably 0.1 um to 1 mm, and is more preferably 0.1 um to 50 um.

Turning now to **Fig. 1****,** a schematic of the multi-layer bipolar battery stack apparatus **50** is depicted, having an exemplary arrangement of multi-layer battery cell components as they can appear prior to undergoing a multi-layer lamination process, in accordance with an embodiment of the present disclosure. Proceeding in a direction from an area of high voltage **28** to an area of low voltage **30,** the multi-layer bipolar battery stack apparatus **50** comprises multiple layered cells **10,** with each layered cell **10** comprising the current collector **12,** cathode layer **14,** separator **16,** and anode layer **18.**

Turning now to **Fig. 2****,** a schematic of the multi-layer bipolar battery stack apparatus **50** is depicted, having an exemplary arrangement of multi-layer battery cell components as they can appear after undergoing a multi-layer lamination process, in accordance with an embodiment of the present disclosure.

As can be seen by a review of **Figs. 1** and **2****,** a height, H **26,** of the multi-layer bipolar battery stack apparatus **50** after multi-layer lamination (see **Fig. 2****),** is always less than a height, h **22,** of the multi-layer bipolar battery stack apparatus **50** prior to completion of multi-layer lamination (see **Fig. 1****),** by at least 20%. Namely, H / h < 0.8. Similarly, with respect to single layered cells **10,** as can be seen by a review of **Figs. 4** and **5****,** a thickness, T **34,** of a single layered cell **10** of the multi-layer bipolar battery stack apparatus **50** after multi-layer lamination (see **Fig. 5****),** is always less than a thickness, t **32,** of a single layered cell **10** of the multi-layer bipolar battery stack apparatus **50** prior to completion of multi-layer lamination (see **Fig. 4****),** by at least 20%. Namely, T / t < 0.8. Due to Poisson's effect, a length, L **24,** of the current collector **12** which contacts the electrode area (namely, the cathode layer **14** and anode layer **18)** after multi-layer lamination (see **Figs. 2** and **5****),** is always greater than a length, 1 **20**, of the current collector **12** which contacts the electrode area (namely, the cathode layer **14** and anode layer **18)** prior to multi-layer lamination (see **Figs. 1** and **4****).** Namely, 1 < L. As a result, the current collector **12** layers must be able to accommodate such dimension by plastically deforming along with the remaining components of the multi-layer bipolar battery stack apparatus **50** without rupturing, as can be seen in deformation area **40** in **Fig. 5****.** The amount of such plastic deformation needs to be at least 5%, and preferably, greater than 15%. This will prevent cell shorting from occurring due to current collector **12** breakage during the multilayer lamination process. Additionally, the current collector's **12** yield strength cannot be lower than 50 MPa to prevent over expansion of the multi-layer bipolar battery stack apparatus **50;** conversely, the current collector's **12** yield strength cannot be greater than 1000 MPa to prevent delaminating due to elastic deformation of the current collector **12.**

As can be understood, by utilizing specific mechanical properties for the current collectors **12,** the present disclosure enables multi-layer lamination of bipolar cells without breaking the current collectors **12** in the multi-layer bipolar battery stack apparatus **50** during the multi-layer lamination process. This is in contrast to and an advantage over conventional current collector materials, which cannot guarantee that the cell is free of shortage in the multi-layer stack. For example, in comparing elongation at break and yield strength of a conventional current collector with that of the current collector **12** of the present disclosure, the following is observed. With a conventional current collector, elongation at break is typically 2 - 5%, while yield strength is typically in the range of 150 - 250 MPa. Conversely, with the current collector **12** of the present disclosure, elongation at break must be greater than 5%, while yield strength may be in the range of 50 - 1000 MPa.

The present disclosure thus offers distinct advantages for high voltage electrochemical cells over conventional current collectors in multi-layer bipolar batteries. As mentioned above, the present disclosure enables multi-layer lamination of bipolar battery cells, which significantly increases production throughput and yield, and potentially electrical performance, with minimizing the probability of battery shortage due to bipolar current collector breakage.

The foregoing description is illustrative of particular embodiments of the invention, but is not meant to be a limitation on the practice thereof. While embodiments of the disclosure have been described in terms of various specific embodiments, those skilled in the art will recognize that the embodiments of the disclosure may be practiced with modifications without departing from the spirit and scope of the invention.

## Claims

1. A method of forming a stacked bipolar battery comprising laminating a plurality of layered cells of the stacked bipolar battery together at a single time.

2. The method of Claim 1 comprising:
forming the plurality of layered cells, wherein each of the plurality of layered cells comprises:
a first current collector having a first side and a second side;
a cathode layer having a first side and a second side, wherein the first side of the cathode is formed on the second side of the first current collector;
a separator layer having a first side and a second side, wherein the first side of the separator is formed on the second side of the cathode layer; and
an anode layer having a first side and a second side, wherein the first side of the anode layer is formed on the second side of the separator layer.

3. The method of claim 1 or 2, wherein each of the plurality of layered cells is circular, square, rectangular, hexagonal, trapezoidal, or a desired shape as needed based on a design use.

4. The method of Claim 2 or 3, wherein each of the plurality of layered cells comprises a second current collector having a first side and a second side, wherein the first side of the second current collector is attached to the second side of the anode layer.

5. The method of any of Claims 2 to 4, wherein the first current collector has a thickness of 0.1 um to 1 mm.

6. The method of any of Claims 2 to 5, wherein the first current collector has a yield strength between 50 MPa and 1000 MPa and an elongation at break of at least 5%.

7. The method of any of Claims 2 to 6, wherein the first the current collector is composed of of metal foil, conductive films or papers, or single-layer or sandwiched composites with electrically conductive agents.

8. The method of any of Claims 2 to 7, wherein the cathode layer has a thickness of 0.1 um to 500 um.

9. The method of any of Claims 2 to 8, wherein the anode layer has a thickness of 0.1 um to 500 um.

10. The method of any of Claims 2 to 9, wherein the separator layer has a thickness of 0.1 um to 50 um.

11. The method of any of Claims 2 to 10, wherein laminating the plurality of layered cells comprises compressing the plurality of layered cells, wherein a height H of the stacked bipolar battery after compression is reduced by at least 20% of a height h before compression.

12. The method of any of Claims 2 to 11, wherein laminating the plurality of layered cells comprises compressing the plurality of layered cells, wherein a thickness T of each of the plurality of layered cells after compression is reduced by at least 20% of a thickness t before compression.

13. The method of any of Claims 2 to 12, wherein laminating the plurality of layered cells comprises compressing the plurality of layered cells, wherein a length L of each of the first current collectors after compression is greater than a length 1 of each of the first current collectors before compression.

14. The method of any of Claims 2 to 13, wherein laminating the plurality of layered cells comprises compressing the plurality of layered cells, wherein a length L of each of the first current collectors after compression increases by 5% - 15% from a length 1 before compression.

15. The method of any of Claims 2 to 14, wherein a yield strength of each of the first current collectors is greater than or equal to 50 MPa to prevent over expansion and less than or equal to 1000 MPa to prevent delaminating due to elastic deformation.
